# EUROPEAN PATENT APPLICATION

(11) **EP 2 469 149 A2**
(43) Date of publication of application: **27.06.2012**
(21) Application number: 11162927.5
(22) Date of filing: 19.04.2011
(51) Int. Cl.: F16T 1/34, F16T 1/36, F16T 1/38

(54) **Trap assembly for heating system**

(30) Priority: 21.04.2010 NL 2004585
(71) Applicant: M & G Groep B.V., 9723 BP Groningen (NL)
(72) Inventor: Bruining, Hendrik, 9471 BS, Zuidlaren (NL); Pestoor, Ietse Jan, 9891 AA, Ezinge (NL)
(74) Representative: van Westenbrugge, Andries

(57) **Abstract**

The invention relates to a drain trap assembly comprising an upper part having an inlet and an outlet of the drain trap assembly and a cup part. The inlet comprises a compression fitting for attaching the drain trap assembly to a vertical supply pipe. The cup part forms a cavity and comprises an annular edge configured for coupling the cup part to the upper part. The upper part further comprises a central passage from the inlet into the cavity of the cup part. The upper part comprises an annular support structure adjacent to the compression fitting and configured for receiving a support frame. The support frame is a separate element configured to attach the drain trap assembly by means of a strap shaped fastening device to a pipe in which condensate is formed and which is supplied through the vertical supply pipe to the drain trap assembly.

## Description

### TECHNICAL FIELD OF THE INVENTION

The invention relates generally to a trap, more particularly to a drainage trap or anti-siphon trap for use in a heating system.

### BACKGROUND OF THE INVENTION

British patent application GB-A-1 236 396 and American patent publication US-A-3,527,027 disclose an apparatus for the filtration of air or other gaseous media, wherein the parts forming the apparatus are attached to each other by screw fittings. A main body comprises an air inlet and an air outlet (both in a horizontal orientation) and a tubular micro filter assembly is attached on the bottom side using a screw fitting. No specific support structure is disclosed as a separate element attachable to an upper side of the apparatus using one of the screw (compression) fittings.

American patent publication US-A-1,828,626 discloses an apparatus for the removal of moisture from compresses air, comprising an air inlet, air outlet, and a meandering pathway for the air inside. Furthermore, an outlet for moisture is provided in the bottom part. No specific support structure is provided as a separate element.

Heating systems have become more efficiently, resulting in condensation of the flue gases. The water of condensation has to be drain away from the heating system. Preferably, the water of condensation is drain away via the waste pipe to the sewerage. Regulations require that the flue gases, which could be explosive, could not reach the sewerage. Furthermore, the flue gas or exhaust gases and sewer gas should be prevented to enter the interior of the building. To comply with this requirements, as system with two drain traps in series is used. A first trap is used to provide a water seal or air trap between the exhaust pipe and the air pressure in the housing and a second trap is used to provide a water seal or air trap between the air pressure in the housing and the sewerage. By means of a duct the water of condensation is transported from an outlet of the first trap to an inlet of the second trap.

An inlet of the first trap is coupled to an end of a perpendicular positioned pipe. A compression fitting at the inlet of the first trap is used to couple the first trap to the perpendicular pipe. The compression fitting comprises a coupling nut, a cone-shaped ring and a threaded part of the inlet of the trap. However, ageing of the cone-shaped ring could result in dislodgement of the connection as a result of which the trap will slide down from the perpendicular pipe.

Furthermore, the amount of dirt collected in the cup of the trap depends on the usage of the heating system. A trap filled with dirt is heavier than when filled with water. As a result of that, the trap will slide earlier down from the perpendicular pipe when filled with dirt.

Regular maintenance is required to avoid the sliding down of the trap from the perpendicular pipe.

### SUMMARY OF THE INVENTION

It is an object of the present invention to provide an inventive drain trap assembly for a heating system free of the above noted prior art limitations. The present invention provides a new condensate drain trap that is easy to install.

According to the invention, this object is achieved by device having the features of Claim 1. Advantageous embodiments and further ways of carrying out the invention may be attained by the measure mentioned in the dependent claims.

According to the invention, a drain trap assembly comprises an upper part having an inlet and an outlet of the drain trap assembly and a cup part which forms a cavity and comprising an annular edge configured for coupling the cup part to the upper part,. The upper part comprises a central passage from the inlet into cavity of the cup part. The inlet comprises a compression fitting for attaching the drain trap assembly to a vertical supply pipe. The upper part comprises an exterior annular support structure adjacent to the compression fitting and configured for receiving a support frame. The support frame is a separate element and configured to attach the drain trap assembly to an exhaust pipe of a heating system by means of a strap shaped fastening device, such as a tie-wrap.

These features provide a coupling structure for coupling the drain trap assembly to a pipe which is long lasting and does not require maintenance.

In an embodiment of the invention, the annular support structure is a raised annular rim adjacent to a threaded part of the inlet compression fitting positioned on the upper part. This feature provides a support structure which is integrated in the upper part which does not make the production process of the upper part more complicated.

In a further embodiment, the support frame comprises fork structure configured to butt a side of the raised annular rim opposite to the threaded part of the inlet. This feature allows a fitter to twist the coupling nut without changing the position of the upper part relative to the pipe.

In an embodiment of the invention, the support frame comprises a first bracket which is parallel to the annular support structure and extends beyond the compression fitting when the support frame is received in the annular support structure. These features provides a coupling structure allowing a fitter to couple the drain trap assembly at short distance from a horizontal pipe while he still can twist the coupling nut.

In an embodiment, the support frame comprises a second bracket which is perpendicular to the annular support structure and extends beyond a drain cavity housing when the support frame is received in the annular support structure. These features enable a fitter to couple the drain trap assembly at short distance from a vertical pipe.

In an embodiment, the assembly further comprises a detachable inlet pipe extension part. This feature enables a fitter to have one kit of parts which can be used for two different applications. Without inlet pipe extension part, the cup part can almost fully be filled with dust before the trap is obstructed. This allows one to enlarge the interval between two successive maintenance services, which reduces the maintenance cost of the heating system. In case the inlet pipe extension part is used the drain trap has an increased drain trap height which allows one to use the drain trap in a heating system with a increased air pressure between inlet and outlet. For example, the maximum air pressure difference drain between the inlet and outlet is without inlet pipe extension part about 500 Pa and with extension part about 1500 Pa. The maximum air pressure difference is determined by the height of a water column that could be present in the drain trap assembly.

In a further embodiment, the detachable inlet pipe extension part comprises a tubular part with at one end a conical inner side and wherein a free end of the central passage comprises a corresponding conical outer side for forming a seal between upper part and the inlet pipe extension part. In this way a press fitting is provided which is reliable and robust.

In a further embodiment, the inlet pipe extension part comprises two or more support ribs extending radially from the tubular part. This features provide means to position the conical inner side of inlet pipe extension part in the cup part such that the conical inner side is in line with the free end of the central passage of the upper part. This simplifies the composition of the drain trap assembly.

In a further embodiment, the inlet pipe extension part further comprises an annular support part which is coupled to the two or more support ribs and encompasses radially the tubular part and the two or more support ribs. This provides a more robust solution to position the extension part in the cup part.

In an embodiment, the cup part comprises a recess configured for positioning the inlet pipe extension part in the cup part. This feature allows to fixate the inlet pipe extension part in the axial direction in the cup part. This allows a fitter to reduce the length of the inlet pipe extension part and consequently to increase the drain lock pressure.

It will be clear that the various aspects mentioned in this patent application may be combined and may each be considered separately for a divisional patent application. Other features and advantages of the invention will become apparent from the following detailed description, taken in conjunction with the accompanying drawing which illustrate, by way of example, various features of preferred embodiments of the invention.

### BRIEF DESCRIPTION OF THE DRAWINGS

These and other aspects, properties and advantages and details of the invention will be explained hereinafter based on the following detailed description of exemplary embodiments with reference to the drawings, wherein like reference numerals denote like or comparable parts, and in which:
FIG. 1 is a first side view of a first embodiment of a trap assembly according to the invention;
FIG. 2 is second side view of the first embodiment;
FIG. 3 is an enlarged view of a detail of the first embodiment shown in FIG. 2;
FIG. 4 is an elevation view, partly in cross section, of the first embodiment shown in FIG. 1;
FIG. 5. is an exploded view of the embodiment shown in FIG. 1;
FIG. 6 is a side view of a second embodiment of a trap assembly according to the invention; and,
FIG. 7 is an exploded view of the embodiment shown in FIG. 6.

### DETAILED DESCRIPTION OF EXEMPLARY EMBODIMENTS

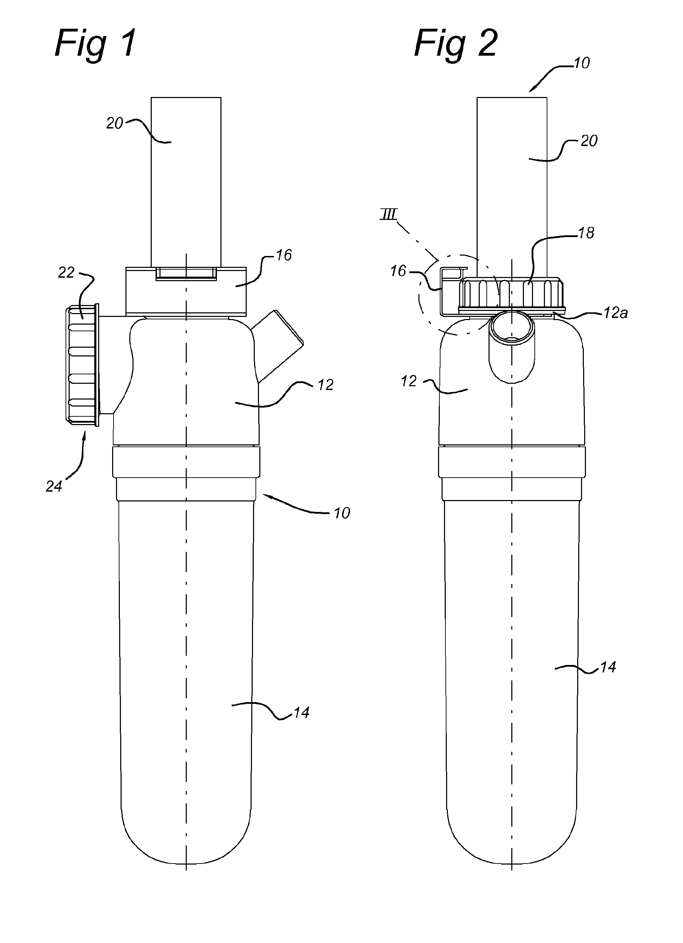

Referring to the drawings, numeral 10 in FIGS. 1 and 2 indicates a first embodiment of an improved condensate drain trap assembly for use in a heating system or air conditioning system. The drain trap is configured for draining the condensate water generated in a pipe of a heating system of air conditioning system and preventing exhaust gasses of air from flowing into or out of the heating system or air conditioning system. The drain trap 10 comprises and upper part 12 and a cup part 14. A vertical supply pipe is coupled to an inlet of the drain trap 10 by means of a compression fitting. The vertical supply pipe supplies condensate formed and collected in an air duct of a heating system or air conditioning system to the drain pipe. The drain part functions as an air lock for the air in the air duct. In FIG 2 the coupling nut 18 is shown. The upper part 12 further comprises an outlet 24. The outlet comprises a compression fitting for coupling a drain pipe (not shown) to the drain trap 10. The upper part 12 comprises an annular support structure 12a adjacent to the compression fitting, in FIG. 2 adjacent to the coupling nut 18, which is configured to receive a support frame 16, which is formed and used as a separate element. The annular support structure is a raised annular rim adjacent to the compression fitting of the inlet. The support frame 16 is configured to attach directly the drain trap assembly 10 to the air duct not shown by means of a strap shaped fastening device, such as a tie wrap, collar or pipe clamp. The support frame 16 comprises a fork structure 16c in a specific embodiment configured to butt a side of the raised annular rim opposite to the side facing the coupling nut 18. In an embodiment the fork structure comprises a semi-circular curvature which corresponds to the side of raised annular rim.

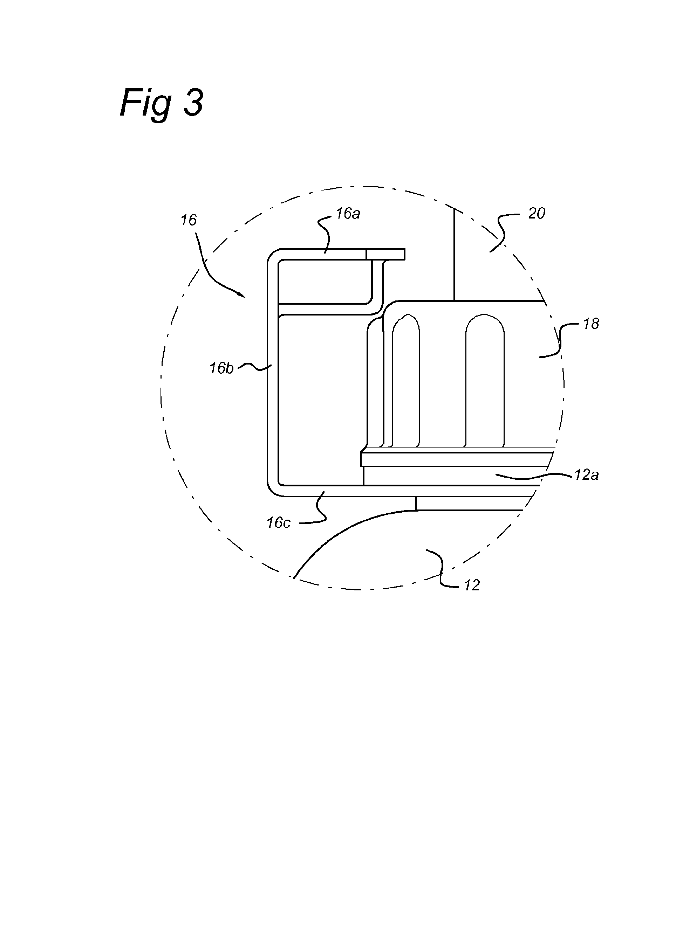

FIG. 3 shows an enlarged view of a detail of the first embodiment shown in FIG. 2. The support frame 16 is received in an annular groove between the raised annular rim 12a around the vertical inlet duct comprising the inlet compression fitting 18 and the upper side of the housing of the upper part 12 which forms the cavity of the trap together with the cup part. The fork structure 16c butts to a side of the raised annular rim opposite to the side facing the threaded part of the inlet compression fitting or union nut 18 of the compression fitting. The support frame 16 further comprises a first bracket 16a and a second bracket 16b. The first bracket is essentially parallel to the annular support structure 12a. The second bracket 16b is essentially perpendicular to the fork part 16c of the support frame 16 and the first bracket 16a. The first bracket 16a further comprises a securing structure to ensure that the support frame 16 can not easily become detached when secured to a horizontal pipe by means of a strap shaped fastening device, such as a tie-wrap, collar or pipe clamp (not shown). In the present embodiment, the securing structure is formed by a passage. In another embodiment, a raised edge at the side of the first bracket facing the inlet ensures that the support frame 16 cannot slide from the strap-shaped fastening device. The first bracket 16a extends beyond the compression fitting 18 when the support frame is received in the annular support structure. This structure allows one to twist the union nut 18 without changing the position of the upper part 12 relatively to the pipe. The second bracket 16b extends beyond the body formed by the upper part 12 and cup part 14. This enables one to fasten the drain trap assembly to a vertical pipe. In the present description a horizontal pipe is a pipe having a cylinder axis parallel to a horizontal plane and a vertical pipe is a pipe with a cylinder axes perpendicular to a horizontal plane. The first bracket 16a and the fork structure 16c ensure that the support frame 16 cannot glide from a strap-shaped fastening device when the support frame 16 is attached to a vertical pipe.

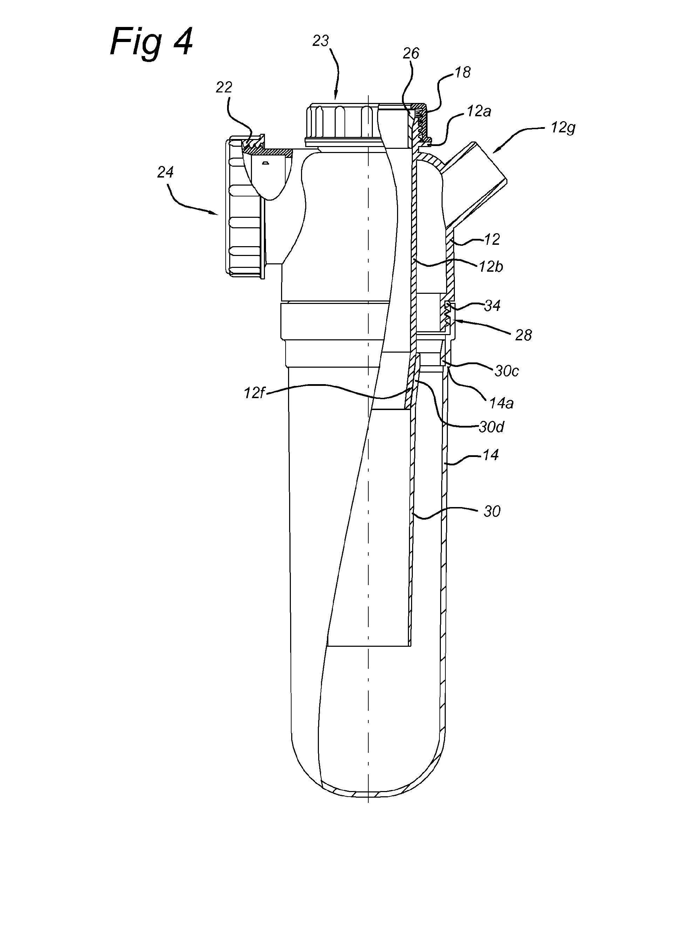

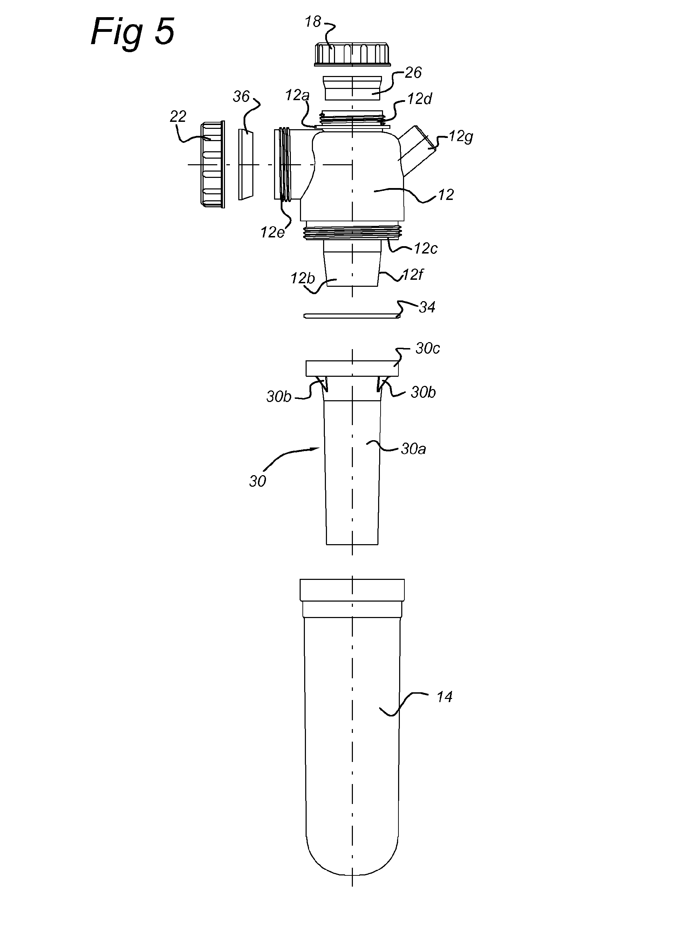

FIG. 4 is an elevation view, partly in cross section, of the first embodiment shown in FIG. 1 and FIG. 5. is an exploded view of the embodiment shown in FIG. 1. A compression fitting of the inlet 23 comprises a threaded part on the upper part 12, a union nut 18 and a conical-shaped ring 26. By tightening the union nut 18 on the threaded part, the conical-shaped ring 26 is pressed into the inlet passage 12b and forms a compression seal when a vertical supply pipe (not shown) is at least partially inserted in the inlet passage 12b. The inlet passage 12b forms a pass through the cavity of the upper part 12 and protrudes below the side configured for attaching the cup part 14. In this way a central passage is provided from the inlet into the cavity of the cup part. A screw coupling 28 is used to couple the cup part 14 to the upper part 12. The upper part 12 comprises a thread 12c and the cup part 14 comprises a corresponding thread. An O-ring 34 provides a seal between the upper part 12 and the cup part 14. A compression fitting is provided at the outlet 24 of the upper part 12 by means of a threaded part 12e, a union nut 22 and a conical-shaped ring 36. Instead of the compression fitting and screw coupling any other suitable coupling could be used to couple the inlet and/or outlet drain trap to a pipe and providing a seal.

A detachable inlet pipe extension part 30 extends inlet passage 12b of the upper part 12 into the cup part 14. The detachable inlet pipe extension part 30 comprises a tubular part 30a with at one end a conical inner side 30d. A free end of the inlet passage 12b comprises a corresponding conical outer side 12f for forming a seal between upper part (12) and the inlet pipe extension part (30). By means of the detachable inlet pipe extension part 30, a fitter can use the same upper part 12 and cup part 14 for two different applications. In the first application, wherein the inlet pipe extension part 30 is positioned in the cup part 14, the inlet pipe extension part 30 increases the maximum air pressure difference between inlet and outlet. This application is suitable for heating systems with smaller exhaust pipes and consequently increased pressure in the exhaust pipe. For example, without inlet pipe extension part 30, the maximum air pressure difference drain between the inlet and outlet is about 500 Pa and with extension part about 1500 Pa. It might be clear that the maximum air pressure difference is determined by the height of a water column that could be present in the drain trap assembly, which is defined by the length of the inlet pipe below the level of the outlet pipe.

In the second application, wherein the inlet pipe extension part 30 is omitted, the cup part 30 can almost fully be used to collect dirt that is present in the condensate collected in the exhaust pipe. This is very suitable in large heating systems which produce lots of exhaust gases. By having a larger collection cavity, the time between two successive services can be extended, which decreases the maintenance costs of the heating system.

The inlet pipe extension part 30 comprises a tubular part 30a, two or more support ribs 30b and an annular support part 30c positioned around the tubular part 30a. The two or more support ribs 30b extend radially from the tubular part 30a to the annular support part 30c. The two or more support ribs 30b and annular support part 30 are configured to position the inlet pipe extension part 30 in the cup part 14 to align the tubular part 30a with the conical free end 12f of the inlet passage 12b. FIG.4 shows that the cup part comprises a recess 14a for receiving the ends of the two or more support ribs 30b and annular support part 30c. When coupling the cup part 14 to the upper part 12, the conical end of the tubular part 30a is pressed to the corresponding conical shaped end 12f of the inlet passage 12a. In this way, it is easy to install the inlet pipe extension part in the upper part 12 and the cup part 14 and to provide a sealing between the conical shaped end 12f and the conical end 30d of the tubular part 30a.

The upper part 12 comprises optionally an additional inlet 12g. The additional inlet 12g has an opening which is positioned at least above the bottom of the outlet 24. The additional inlet 19g could be used for filling the drain part assembly. The additional inlet could further by used to ventilate to outlet and coupled drain pipe.

In more general terms, the embodiment shown in Fig. 4 and 5 can be described as a drain trap assembly comprising an upper part 12 having an inlet 23 and an outlet 24 of the drain trap assembly, the inlet comprising a compression fitting 18 for attaching the drain trap assembly to a vertical supply pipe, and a cup part 14 forming a cavity and comprising an annular edge configured for coupling the cup part to the upper part 12, wherein the upper part 12 comprises a central passage from the inlet into the cavity of the cup part, wherein the assembly further comprises a detachable inlet pipe extension part 30. The features relating to the detachable inlet pipe extension part 30 as described above can be added to this general embodiment.

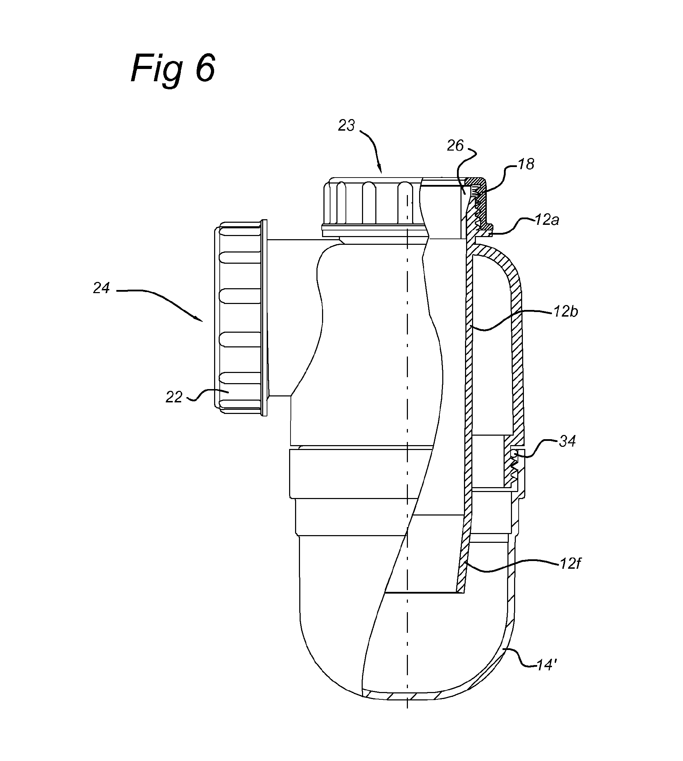

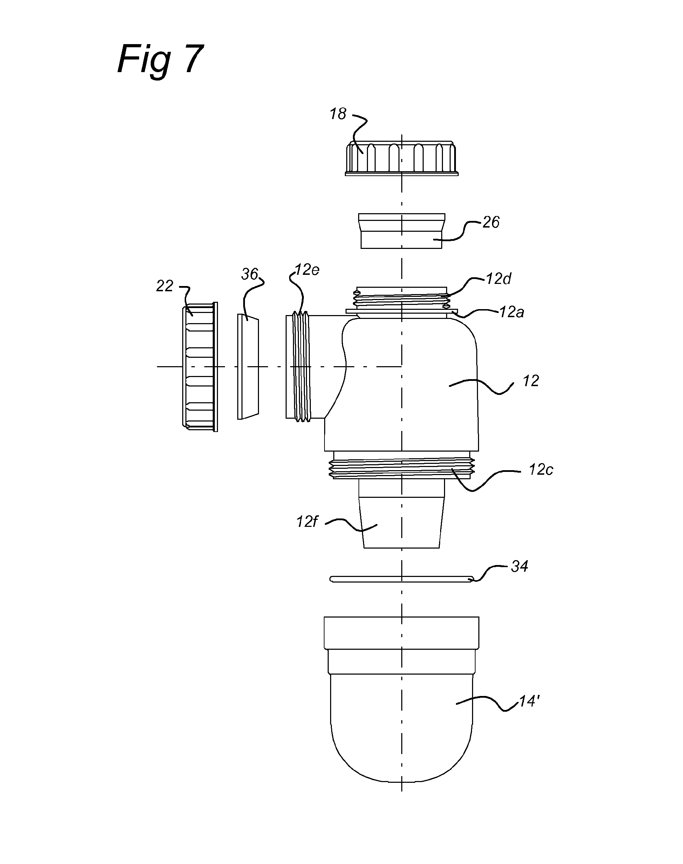

FIG. 6 is a side view of a second embodiment of a trap assembly according to the invention and FIG. 7 is an exploded view of the embodiment shown in FIG. 6. In this embodiment, the upper part 12 is similar to the upper part shown in FIG 4. The only difference is the absence of the additional inlet. In the second embodiment, a small cup part 14' is used instead of the cup part 14 suitable for receiving the inlet pipe extension part 30. In this way, a drain trap assembly is provided with annular support rim 12a, which requires less room for installing the assembly to a pipe by means of a support frame (not shown) and providing the advantage when attaching the drain trap to a pipe by means of a strap-shaped fastening device, such as a tie-wrap, collar or pipe clamp. This way of fastening a drain trap to a pipe prevents that the drain trap glides from the supply pipe attached to the inlet due to aging of the material of the conical shaped ring being part of the compression fitting. Consequently, there is no need to tighten the union nut to the upper part, which reduces the maintenance costs of the system.

It is noted that in the embodiments as shown in Fig. 4-7, a fastening structure 16 as shown in the embodiment of Fig. 1-3 may also be applied in a similar manner (i.e. attached using the annular support rim 12a and compression fitting 18).

The upper part 12, cup part 14, 14' and inlet pipe extension part 30 may be made from thermoplastic material, also known as thermosoftening plastic, such as PVC, PE, PP or the like that have a desired allowance. The parts are preferably made by an injection moulding process. The support frame for attaching the drain trap assembly to an exhaust pipe or air pipe is preferable made from metal by punching and bending processes.

The measures described hereinbefore for embodying the invention can obviously be carried out separately or in parallel or in a different combination or if appropriate be supplemented with further measures; it will in this case be desirable for the implementation to depend on the field of application of the device. It should be understood that although particular embodiments of the invention have been described by way of illustrating the invention, the invention includes all modifications and equivalents thereof falling within the scope of the appended claims.

## Claims

1. Drain trap assembly comprising:
- an upper part (12) having an inlet (23) and an outlet (24) of the drain trap assembly, the inlet comprising a compression fitting (18) for attaching the drain trap assembly to a vertical supply pipe, and
- a cup part (14) forming a cavity and comprising an annular edge configured for coupling the cup part to the upper part (12), wherein the upper part (12) comprises a central passage from the inlet into the cavity of the cup part,
wherein the upper part comprises an annular support structure (12a) adjacent to the compression fitting (18) and configured for receiving a support frame (16), the support frame is a separate element being configured to attach the drain trap assembly by means of a strap shaped fastening device, to a pipe in which condensate is formed and which is supplied through the vertical supply pipe to the drain trap assembly.

2. Assembly according to claim 1, wherein the annular support structure(12a) is a raised annular rim adjacent to a threaded part (12d) of the inlet compression fitting positioned on the upper part.

3. Assembly according to claim 2, wherein the support frame (16) comprises a fork structure (16c) configured to butt a side of the raised annular rim opposite to the threaded part of the inlet.

4. Assembly according to any of the claims 1 - 3, wherein the support frame (16) comprises a first bracket (16a) which is parallel to the annular support structure (12a) and extends beyond the compression fitting (18) when the support frame is received in the annular support structure.

5. Assembly according to any of the claims 1 - 4, wherein the support frame (16) comprises a second bracket (16b) which is perpendicular to the annular support structure (12a) and extends beyond a drain cavity housing when the support frame is received in the annular support structure.

6. Assembly according to any of the claims 1 - 5, wherein the assembly further comprises a detachable inlet pipe extension part (30).

7. Assembly according to claim 6, wherein the detachable inlet pipe extension part (30) comprises a tubular part (30a) with at one end a conical inner side and wherein a free end of the central passage comprises a corresponding conical outer side (12f) for forming a seal between upper part (12) and the inlet pipe extension part (30).

8. Assembly according to any of the claims 6 - 7, wherein the inlet pipe extension part (30) comprises two or more support ribs (30b) extending radially from the tubular part (30a).

9. Assembly according to claim 8, wherein the inlet pipe extension part (30) further comprises an annular support part (30c) which is coupled to the two or more support ribs (30b) and encompasses radially the tubular part (30a) and the two or more support ribs (30b).

10. Assembly according to any of the claims 8 - 9, wherein the cup part (14) comprises a recess (14a) configured for positioning the inlet pipe extension part (30) in the cup part (14).

11. Upper part of a drain trap comprising all technical features of an upper part of a drain trap assembly according to claims 1 - 10.

12. Spare part for use in a drain trap comprising all technical features of an inlet pipe extension part (30) according to any of the claims 6 - 10.

13. Support frame for attaching a drain trap to a pipe comprising all technical features of a support frame (16) according to any of the claims 3 - 5.

14. Method of installing a drain trap to a heating system, the method comprising:
- providing a drain trap assembly according any of the claims 1 - 10;
- attaching the inlet of the drain trap assembly to a drain pipe of an exhaust pipe;
- providing a support frame according to claim 13;
- receiving the support frame in the annular support structure;
- providing a strap shaped fastening device, such as a tie-wrap; and
- attaching the support frame to the exhaust pipe by means of the strap shaped fastening device.
